# EUROPEAN PATENT APPLICATION

(11) **EP 4 387 310 A1**
(43) Date of publication of application: **19.06.2024**
(21) Application number: 22855378.0
(22) Date of filing: 08.08.2022
(51) Int. Cl.: H04W 24/02, H04W 28/16

(54) **COMPUTING SESSION RELEASE METHOD, AND DEVICE AND READABLE STORAGE MEDIUM**

(30) Priority: 10.08.2021 CN 202110915775
(71) Applicant: Vivo Mobile Communication Co., Ltd., Dongguan, Guangdong 523863 (CN)
(72) Inventor: KANG, Yanchao, Dongguan, Guangdong 523863 (CN); CHONG, Weiwei, Dongguan, Guangdong 523863 (CN); WU, Xiaobo, Dongguan, Guangdong 523863 (CN)
(74) Representative: Lavoix
(86) International application number: PCT/CN2022/110834
(87) International publication number: WO 2023/016397

(57) **Abstract**

Embodiments of this application provide a computing session release method and device and a readable storage medium, pertaining to the field of communication technologies. The method includes: obtaining, by an SMF and/or a computing power management function, a first message, where the first message is used for requesting release of communication resources and/or computing power resources of a computing session; and performing, by the SMF and/or the computing power management function, corresponding resource release to enable a network to release the communication resources and computing power resources.

## Description

### CROSS-REFERENCES TO RELATED APPLICATIONS

This application claims priority to Chinese Patent Application No. 202110915775.1, filed in China on August 10, 2021, which is incorporated herein by reference in its entirety.

### TECHNICAL FIELD

Embodiments of this application relate to the field of communication technologies, and specifically to a computing session release method and device and a readable storage medium.

### BACKGROUND

In recent years, with the continuous evolution and development of services such as autonomous driving, unmanned aerial vehicles, extended reality (extended reality, XR), and the industrial internet of things (industrial internet of things, IIoT), data-driven intelligent applications are breaking the boundaries between the three major application scenarios of enhanced mobile broadband (enhanced mobile broadband, eMBB), ultra-reliable low latency communication (ultra-reliable low latency communication, URLLC), and massive machine type communications (massive machine type communications, mMTC) in the existing fifth generation of mobile communication system (the fifth generation of mobile communication system, 5G).

Currently, the 5G system only provides allocation of communication resources, cannot comprehensively consider the computing power requirements and communication requirements of user computing services, and cannot jointly optimize scheduling and allocation of communication and computing resources, thus failing to provide a comprehensive service experience for user computing services. Operator networks also cannot comprehensively consider the communication and computing requirements of a large number of users to optimize configuration and scheduling of communication and computing resources in the network.

### SUMMARY

An object of embodiments of this application is to provide a computing session release method and device and a readable storage medium to solve the technical problem that at present the network is unable to simultaneously release communication resources and computing power resources.

According to a first aspect, an embodiment of this application provides a computing session release method including:
obtaining, by a session management function SMF, a first message, where the first message is used for requesting release of communication resources and/or computing power resources of a computing session;
sending, by the SMF, a second message to a policy control function PCF based on the first message, where the second message is used for requesting deletion of a communication management policy; and/or,
sending, by the SMF, a third message to a computing power management function based on the first message, where the third message is used for requesting release of the computing power resources.

According to a second aspect, an embodiment of this application provides a computing session release method including:
receiving, by a computing power management function, a third message from an SMF; and
sending, by the computing power management function, a seventh message to a PCF based on the third message, where the seventh message is used for requesting deletion of a computing power management policy; where
the third message is sent by the SMF based on a first message, where the first message is used for requesting release of communication resources and/or computing power resources of a computing session.

According to a third aspect, an embodiment of this application provides a computing session release method including:
obtaining, by a computing power management function, a first message, where the first message is used for requesting release of communication resources and/or computing power resources of a computing session;
sending, by the computing power management function, a seventh message to a PCF based on the first message, where the seventh message is used for requesting deletion of a computing power management policy; and/or,
sending, by the computing power management function, a ninth message to an SMF based on the first message, where the ninth message is used for release of communication resources.

According to a fourth aspect, an embodiment of this application provides a computing session release method including:
receiving, by an SMF, a ninth message from a computing power management function; and
sending, by the SMF, a second message to a PCF based on the ninth message, where the second message is used for requesting deletion of a communication management policy; where
the ninth message is sent by the computing power management function based on a first message, where the first message is used for requesting release of communication resources and/or computing power resources of a computing session.

According to a fifth aspect, an embodiment of this application provides a computing session release method including:
receiving, by a PCF, second information from an SMF; and
deleting, by the PCF, a communication management policy based on the second information;
   and/or
receiving, by the PCF, a seventh message from a computing power management function; and
deleting, by the PCF, a computing power management policy based on the seventh message; where
the second message is sent by the SMF based on a first message or a ninth message, the seventh message is sent by a computing power management function based on the first message or a third message, the third message is sent by the SMF based on the first message, the ninth message is sent by the computing power management function based on the first message, and the first message is used for requesting release of communication resources and/or computing power resources of a computing session.

According to a sixth aspect, an embodiment of this application provides a computing session release method including:
receiving, by an AMF, a first message from UE, where the first message is used for requesting release of communication resources and/or computing power resources of a computing session; and
sending, by the AMF, the first message to an SMF and/or a computing power management function.

According to a seventh aspect, an embodiment of this application provides a computing session release apparatus including:
a first obtaining module, configured for an SMF to obtain a first message, where the first message is used for requesting release of communication resources and/or computing power resources of a computing session; and
a first sending module, configured for the SMF to send a second message to a policy control function PCF based on the first message, where the second message is used for requesting deletion of a communication management policy; and/or configured for the SMF to send a third message to a computing power management function based on the first message, where the third message is used for requesting release of the computing power resources.

According to an eighth aspect, an embodiment of this application provides a computing session release apparatus including:
a first receiving module, configured for a computing power management function to receive a third message from an SMF; and
a second sending module, configured for the computing power management function to send a seventh message to a PCF based on the third message, where the seventh message is used for requesting deletion of a computing power management policy; where
the third message is sent by the SMF based on a first message, where the first message is used for requesting release of communication resources and/or computing power resources of a computing session.

According to a ninth aspect, an embodiment of this application provides a computing session release apparatus including:
a second obtaining module, configured for a computing power management function to obtain a first message, where the first message is used for requesting release of communication resources and/or computing power resources of a computing session; and
a third sending module, configured for the computing power management function to send a seventh message to a PCF based on the first message, where the seventh message is used for requesting deletion of a computing power management policy; and/or configured for the computing power management function to send a ninth message to the SMF based on the first message, where the ninth message is used for requesting release of communication resources.

According to a tenth aspect, an embodiment of this application provides a computing session release apparatus including:
a second receiving module, configured for an SMF to receive a ninth message from a computing power management function; and
a fourth sending module, configured for the SMF to send a second message to a PCF based on the ninth message, where the second message is used for requesting deletion of a communication management policy; where
the ninth message is sent by the computing power management function based on a first message, where the first message is used for requesting release of communication resources and/or computing power resources of a computing session.

According to an eleventh aspect, an embodiment of this application provides a computing session release apparatus including:
a third receiving module, configured for a PCF to receive second information from an SMF;
a first deletion module, configured for the PCF to delete a communication management policy based on the second information;
a third receiving module, further configured for the PCF to receive a seventh message from a computing power management function; and
a first deletion module, further configured for the PCF to delete the computing power management policy based on the seventh message; where
the second message is sent by the SMF based on a first message or a ninth message, the seventh message is sent by a computing power management function based on the first message or a third message, the third message is sent by the SMF based on the first message, the ninth message is sent by the computing power management function based on the first message, and the first message is used for requesting release of communication resources and/or computing power resources of a computing session.

According to a twelfth aspect, an embodiment of this application provides a computing session release apparatus including:
a fourth receiving module, configured for an AMF to receive a first message from UE, where the first message is used for requesting release of one or both of the communication resources and the computing power resources of a computing session; and
a fifth sending module, configured for the AMF to send the first message to an SMF and/or a computing power management function.

According to a thirteenth aspect, an embodiment of this application provides a communications device including a processor, a memory, and a program or instructions stored in the memory and capable of running on the processor, where when the program or instructions are executed by the processor, the steps of the method according to the first aspect, the steps of the method according to the second aspect, the steps of the method according to the third aspect, the steps of the method according to the fourth aspect, the steps of the method according to the fifth aspect, or the steps of the method according to the sixth aspect are implemented.

According to a fourteenth aspect, an embodiment of this application provides a readable storage medium, where the readable storage medium has a program or instructions stored thereon, and when the program or instructions are executed by a processor, the steps of the method according to the first aspect, the steps of the method according to the second aspect, the steps of the method according to the third aspect, the steps of the method according to the fourth aspect, the steps of the method according to the fifth aspect, or the steps of the method according to the sixth aspect are implemented.

According to a fifteenth aspect, a computer program product is provided, where the computer program product is stored in a non-volatile storage medium, and the computer program product is executed by at least one processor to implement the steps of the method according to the first aspect, the steps of the method according to the second aspect, the steps of the method according to the third aspect, the steps of the method according to the fourth aspect, the steps of the method according to the fourth aspect, the steps of the method according to the fifth aspect, or the steps of the method according to the sixth aspect.

According to a sixteenth aspect, a communications device is provided, where the communications device is configured to perform the method according to the first aspect, the second aspect, the third aspect, the fourth aspect, the fifth aspect, or the sixth aspect.

According to the embodiments of this application, an SMF and/or a computing power management function in the network obtains a message used for requesting release of communication resources and/or computing power resources of a computing session and performs corresponding resource release to enable the network to release the communication resources and computing power resources.

### BRIEF DESCRIPTION OF DRAWINGS

FIG. 1a is an end-to-end schematic diagram of a computing session and a computing bearer according to an embodiment of this application;
FIG. 1b is a schematic diagram of a network architecture according to an embodiment of this application;
FIG. 2 is a first flowchart of a computing session release method according to an embodiment of this application;
FIG. 3 is a second flowchart of a computing session release method according to an embodiment of this application;
FIG. 4a is a first application flowchart according to an embodiment of this application;
FIG. 4b is a second application flowchart according to an embodiment of this application;
FIG. 4c is a third application flowchart according to an embodiment of this application;
FIG. 5 is a first schematic structural diagram of a communications device according to an embodiment of this application; and
FIG. 6 is a second schematic structural diagram of a communications device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application without creative efforts shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, "first", "second", and the like are usually used to distinguish between objects of a same type, and do not restrict a quantity of objects. For example, there may be one or a plurality of first objects. In addition, "and/or" in the specification and claims represents at least one of connected objects, and the character "/" generally indicates that the contextually associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, a new radio (New Radio, NR) system is described as an example below, and NR-related terminology is used in most of the following descriptions. These technologies may also be used for applications other than the NR application, for example, in 6th (6th Generation, 6G) communication systems.

To better understand the solutions of the embodiments of this application, the following is first described.

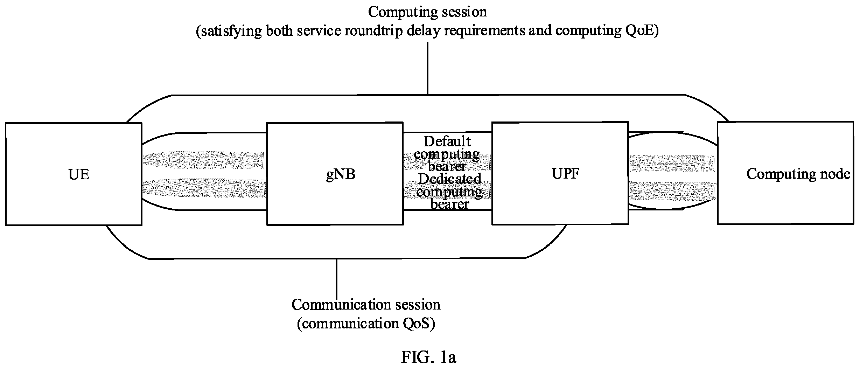

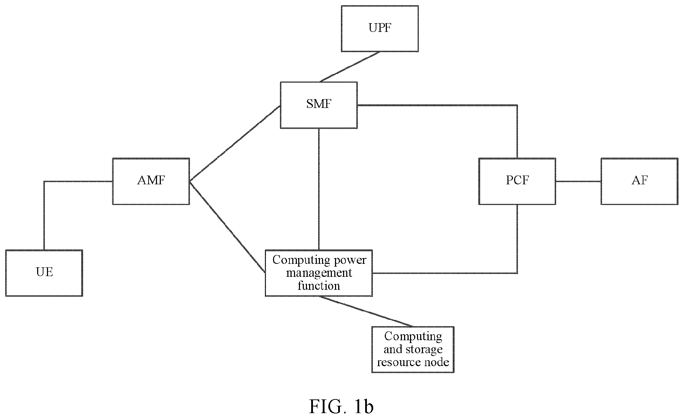

For details about the network architecture applied in the embodiments of this application, refer to FIG. 1a and FIG. 1b;

As shown in FIG. 1a, since release of communication resources and computing power resources needs to be considered, in the embodiments of this application, a computing resource node (or referred to as a computing and storage resource node) or another new functional entity is added to the network architecture for providing one or both of the computing resources and storage resources. Accordingly, in the current communication system, a protocol data unit (Protocol Data Unit, PDU) session (session) is established for users by establishing a user plane channel of terminal (User Equipment, UE)-base station (NR Node B, gNB)-user plane function (User Plane Function, UPF) to provide communication services for the user, where the established PDU session needs to meet Quality of Service (Quality of Service, QoS) requirements of user communication services. In the embodiments of this application, a computing session is established for users through a UE-gNB-UPF-computing node to provide communication computing services for the users, and the computing session needs to meet the computing service requirements of the users, that is, meet both communication QoS and computing QoS of the computing services. There are multiple computing bearers in the computing session, and each computing bearer has its own computing QoS and communication QoS and needs to meet both the roundtrip (roundtrip) delay requirements and the computing service requirements. The computing session may also be referred to as a PDU session in implementation, which is implemented in an enhanced PDU session manner.

It should be noted that the resource release for the computing session in the embodiments of this application may be a release of all resources, that is, a release of all communication resources and computing resources. Alternatively, the resource release for the computing session may be a release of some resources, that is, a release of communication resources and computing resources for a specified computing task among a plurality of computing tasks.

FIG. 1b is a network architecture according to an embodiment of this application. Network elements involved include a terminal (User Equipment, UE), an access and mobility management function (Access and Mobility Management Function, AMF), a session management function (Session Management Function, SMF), a computing power management function (also referred to as computing power management element), and a policy control function (Policy Control Function, PCF). The computing power management function (AMF) is a new network element added for managing computing power resources (including computing resources and storage resources) on computing and storage resource nodes (also referred to as computing nodes). As shown in FIG. 1b, the SMF is capable of managing the user plane function (User Plane Function, UPF), that is, allocating UPF-side communication resources and base station-side communication resources for the user according to the communication QoS of the user. The computing power management function is capable of managing the computing and storage resource nodes, that is, allocating computing and storage node resources according to the computing QoS of the user.

The following describes in detail the method provided in the embodiments of this application through specific embodiments and application scenarios thereof with reference to the accompanying drawings.

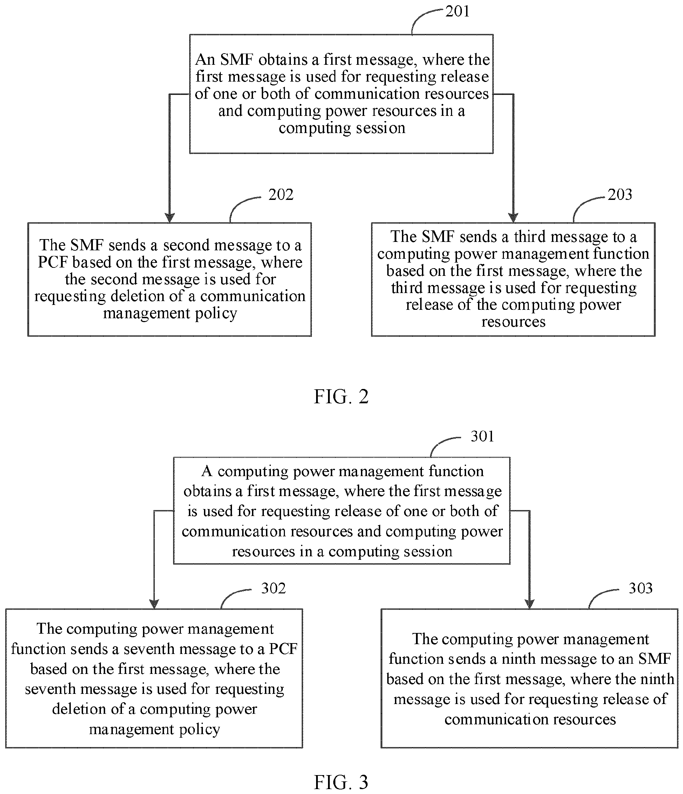

Referring to FIG. 2, an embodiment of this application provides a computing session release method. The method includes the following steps.

Step 201. An SMF obtains a first message, where the first message is used for requesting release of communication resources and/or computing power resources of a computing session, and then performs step 202 and/or step 203.

Step 202. The SMF sends a second message to a PCF based on the first message, where the second message is used for requesting deletion of a communication management policy.

Step 203. The SMF sends a third message to a computing power management function based on the first message, where the third message is used for requesting release of the computing power resources.

The above computing session is a session established in a wireless mobile network to meet computing service requirements of users, which includes both communication resources and computing power resources. The computing session can transmit communication data for users and provide the requested computing services for user data. There may be one or more computing bearers in the computing session, where each computing bearer has its own computing QoS and communication QoS, and needs to meet both roundtrip (roundtrip) delay requirements and computing service requirements. The computing session may also be referred to as a PDU session in implementation, which is implemented in an enhanced PDU session manner. In this case, the computing bearer may also be referred to as a QoS flow (flow) or QoS bearer (bearer) in the implementation.

The SMF is used for communication resource-related processing, and the computing power management function is used for computing power resource-related processing.

In a possible implementation, the above computing power resources include computing resources and storage resources.

The first message may be a protocol data unit (Protocol Data Unit, PDU) session release request, a computing session release request, a computing resource release message, or a communication resource release message.

In this embodiment of this application, there are multiple cases in which the SMF obtains the first message, which are specifically as follows.

Case 1: The SMF and the computing power management function simultaneously obtain the first message, that is, the computing session release is jointly performed by the SMF and the computing power management function, and then the SMF performs communication resource release based on the first message, such as requesting the PCF to delete the communication management policy, and the computing power management function performs computing power resource release based on the first message, such as requesting the PCF to delete the computing power management policy. This scenario is referred to as case 1 below.

Case 2: The SMF obtains the first message, that is, the computing session release is centrally performed by the SMF, and then the SMF performs communication resource release based on the first message, and at the same time, the SMF sends a request message to the computing power management function, requesting the computing power management function to perform computing power resource release. This scenario is referred to as case 2 below.

In this embodiment of this application, the SMF and/or the computing power management function in the network obtains the message used for requesting release of one or both of the communication resources and computing power resources of the computing session, and perform corresponding resource release to enable the network to release the communication resources and computing power resources.

Specifically, the foregoing step 202 means that, in case 1, after obtaining the first message, the SMF sends the second message to the PCF to request deletion of the communication management policy.

For case 1, in a possible implementation, the method further includes:
(1) receiving a fourth message by the SMF from the PCF, where the fourth message is used to respond to the second message; and
(2) releasing the UPF communication resources by the SMF based on the fourth message.

In this embodiment of this application, after completing deletion of the communication management policy, the PCF returns a request response to the SMF. The SMF releases the UPF communication resources based on the request response. It should be noted that the communication management policy and the aforementioned computing power management policy may be different types of session management policies or different types of computing session management policies.

Specifically, the foregoing step 203 means that, in case 2, after obtaining the first message, the SMF sends the third message to the computing power management function to request release of the computing power resources. The specific processing flow for releasing the computing power resources by the computing power management function is described in the following computing power management function-side method.

In a possible implementation, the method further includes:
receiving a fifth message by the SMF from the computing power management function, where the fifth message is used to indicate completion of release of the computing power resources.

In this embodiment of this application, after completing release of the computing power resources, the computing power management function returns a computing power resource release completion notification to the SMF.

This method further includes sending a sixth message by the SMF, where the sixth message is used to respond to the first message.

In this embodiment of this application, the SMF returns the sixth message as a response, based on a path of obtaining the first message.

It should be noted that in case 1, the sending a sixth message by the SMF is specifically performed after the SMF completes the release of the communication resources, and in case 2, the sending a sixth message by the SMF is specifically performed after the SMF completes the release of the communication resources and receives the computing power resource release completion notification returned by the computing power management function.

An embodiment of this application provides a computing session release method. Corresponding to the step performed on the computing power management function side in case 2, the method includes:
(1) receiving a third message by a computing power management function from an SMF; and
(2) sending a seventh message by the computing power management function to a PCF based on the third message, where the seventh message is used for requesting deletion of a computing power management policy; where
the third message is sent by the SMF based on a first message, where the first message is used for requesting release of communication resources and/or computing power resources of a computing session.

In this embodiment of this application, in case 2, after receiving the third message from the SMF, the computing power management function sends the seventh message to the PCF to request deletion of the computing power management policy.

In a possible implementation, the method further includes:
(1) receiving an eighth message by the computing power management function from the PCF, where the eighth message is used to respond to the seventh message;
(2) releasing computing power resources of a computing node by the computing power management function based on the eighth message; and
(3) sending a fifth message by the computing power management function to the SMF, where the fifth message is used to indicate completion of release of the computing power resources.

In this embodiment of this application, the PCF deletes the computing power management policy based on the request from the computing power management function and then returns a request response to the computing power management function; and after receiving the request response, the computing power management function releases the computing power resources of the computing node and then sends a computing power resource release completion notification to the SMF.

Referring to FIG. 3, an embodiment of this application provides a computing session release method. The method includes the following steps.

Step 301. A computing power management function obtains a first message, where the first message is used for requesting release of communication resources and/or computing power resources of a computing session, and then performs step 302 and/or step 303.

Step 302. The computing power management function sends a seventh message to a PCF based on the first message, where the seventh message is used for requesting deletion of a computing power management policy.

Step 303. The computing power management function sends a ninth message to an SMF based on the first message, where the ninth message is used for requesting release of communication resources.

In this embodiment of this application, there are multiple cases in which the computing power management function obtains the first message, which are specifically as follows.

Case 1: The SMF and the computing power management function simultaneously obtain the first message, that is, the computing session release is jointly performed by the SMF and the computing power management function, and then the SMF performs communication resource release based on the first message, such as requesting the PCF to delete the communication management policy, and the computing power management function performs computing power resource release based on the first message, such as requesting the PCF to delete the computing power management policy. This scenario is referred to as case 1 below.

Case 3: The computing power management function obtains the first message, that is, the computing session release is centrally performed by the computing power management function, and then the computing power management function performs computing power resource release based on the first message, and at the same time, the computing power management function sends a request message to the SMF, requesting the SMF to perform communication resource release. This scenario is referred to as case 3 below.

Specifically, the foregoing step 302 means that, in case 1, after obtaining the first message, the computing power management function sends the seventh message to the PCF to request deletion of the computing power management policy.

For case 1, in a possible implementation, the method further includes:
(1) receiving an eighth message by the computing power management function from the PCF, where the eighth message is used to respond to the seventh message; and
(2) releasing computing power resources of a computing node by the computing power management function based on the eighth message.

In this embodiment of this application, after completing deletion of the computing power management policy, the PCF returns a request response to the computing power management function. The computing power management function releases the computing power resources of the computing node based on the request response.

Specifically, the foregoing step 303 means that, in case 3, after obtaining the first message, the computing power management function sends a ninth message to the SMF to request release of the communication resources. The specific processing flow for releasing the communication resources by the SMF is described in the following SMF-side method.

In a possible implementation, the method further includes:
receiving a tenth message by the computing power management function from the SMF, where the tenth message is used to indicate completion of release of communication resources.

In this embodiment of this application, after completing the release of the communication resources, the SMF returns a communication resource release completion notification to the computing power management function.

Further, this method further includes sending an eleventh message by the computing power management function, where the eleventh message is used to respond to the first message.

In this embodiment of this application, the computing power management function returns the eleventh message as a response, based on a path of obtaining the first message.

It should be noted that in case 1, the sending an eleventh message by the computing power management function is specifically performed after the computing power management function completes the release of the communication resources, and in case 2, the sending an eleventh message by the computing power management function is specifically performed after the computing power management function completes the release of the communication resources and receives the communication resource release completion notification returned by the SMF.

An embodiment of this application provides a computing session release method. Corresponding to the step performed on the SMF side in case 3, the method includes:
(1) receiving a ninth message by an SMF from a computing power management function; and
(2) sending a second message by the SMF to the PCF based on the ninth message, where the second message is used for requesting deletion of a communication management policy; where
the ninth message is sent by the computing power management function based on the first message, and the first message is used for requesting release of communication resources and/or computing power resources of a computing session.

In this embodiment of this application, in case 3, after receiving the ninth message from the computing power management function, the SMF sends the second message to the PCF to request deletion of the communication management policy.

In a possible implementation, the method further includes:
(1) receiving a fourth message by the SMF from the PCF, where the fourth message is used to respond to the second message;
(2) releasing the UPF communication resources by the SMF based on the fourth message; and
(3) sending a tenth message by the SMF to the computing power management function, where the tenth message is used to indicate completion of release of communication resources.

In this embodiment of this application, the PCF deletes the communication management policy based on the request from the SMF and then returns a request response to the SMF; and after receiving the request response, the SMF releases the UPF communication resources and then sends a communication resource release completion notification to the computing power management function

An embodiment of this application provides a computing session release method including the following specific steps (1) and (2) and/or steps (3) and (4).
(1) A PCF receives second information from an SMF.
(2) The PCF deletes a communication management policy based on the second information.
(3) The PCF receives a seventh message from a computing power management function.
(4) The PCF deletes a computing power management policy based on the seventh message.

The second message is sent by the SMF based on a first message or a ninth message, the seventh message is sent by the computing power management function based on the first message or a third message, the third message is sent by the SMF based on the first message, the ninth message is sent by the computing power management function based on the first message, and the first message is used for requesting release of communication resources and/or computing power resources of a computing session.

In this embodiment of this application, steps (1) and (2) correspond to the steps performed on the PCF side when the SMF requests the PCF to delete the communication management policy in the above cases 1 to 3; and steps (3) and (4) correspond to the steps performed on the PCF side when the computing power management function requests the PCF to delete the computing power management policy in the above cases 1 to 3.

In a possible implementation, after step (2), this method further includes sending a fourth message by the PCF to the SMF, where the fourth message is used to respond to the second message.

In a possible implementation, after step (4), this method further includes sending an eighth message by the PCF to the computing power management function, where the eighth message is used to respond to the seventh message.

It should be noted that, in each of the above embodiments, the first message obtained by the SMF and the computing power management function is triggered in any one of the following manners:
(1) triggered by a terminal via an AMF, for example, the first message is generated by the UE and reported to the AMF, and then forwarded to the SMF and/or the computing power management function via the AMF;
(2) triggered by an application function (Application Function, AF) via the PCF, for example, triggered in this manner in a case of completion of a computing task;
(3) triggered by the AF and sent to the PCF via a network exposure function (Network Exposure Function, NEF);
(4) triggered by the PCF, for example, triggered in this manner in a case that the PCF determines to release a UE computing bearer when the operator's policy configuration has changed and cannot meet the computing service requirements of the requesting terminal;
(5) triggered by a unified data management (Unified Data Management, UDM) device, for example, triggered in this manner in a case of invalid subscription;
(6) triggered by the SMF, for example, triggered in this manner in a case of congestion control, or triggered in a case that the SMF has received another triggering condition (for example, being triggered by the PCF, UE, UPF, or AMF);
(7) triggered by the computing power management function, for example, trigger in this manner in a case of insufficient computing and storage resources, or triggered in a case that the computing management function has received another triggering condition (for example, being triggered by the PCF, UE, computing and storage resource node, or AMF);
(8) triggered by the AMF, for example, triggered in this manner in a case of congestion control; and
(9) triggered by an access network (Access Network, AN) via the AMF, for example, triggered in this manner in a case that the communication QoS cannot meet the computing service requirements or congestion control occurs.

An embodiment of this application further provides a computing session release method including:
(1) receiving a first message by an AMF from UE, where the first message is used for requesting release of communication resources and/or computing power resources of a computing session; and
(2) sending the first message by the AMF to an SMF and/or a computing power management function.

In this embodiment of this application, the first message obtained by the SMF and/or the computing power management function in the above cases 1 to 3 is sent by the UE via the AMF.

In a possible implementation, the method further includes:
receiving a sixth message by the AMF from the SMF, and sending a twelfth message to the UE, where the twelfth message is used to respond to the first message; that is, after the SMF completes communication resource release, the AMF receives a response message from the SMF and forwards the response to the UE.

In a possible implementation, the method further includes:
receiving an eleventh message by the AMF from the computing power management function and sending a thirteenth message to the UE, where the thirteenth message is used to respond to the first message. That is, after the computing power management function completes computing power resource release, the AMF receives a response message from the computing power management function and forwards the response to the UE.

The method further includes:
sending a fourteenth message by the AMF to a network device based on the sixth message, where the fourteenth message is used to instruct the network device to release the communication resources. That is, the AMF instructs the network device (such as a base station) to release the communication resources on the network side based on the response from the SMF.

It should be noted that the first message to the fourteenth message involved in the above embodiments include one or more of the following:
(1) UE identifier, where the UE identifier may be an internal identifier or an external identifier or may be a permanent identifier or a temporary identifier;
(2) computing session identifier;
(3) PDU session identifier;
(4) bearer identifier; and
(5) QoS flow identifier.

The following describes an execution flow of the implementation of this application with reference to specific embodiments.

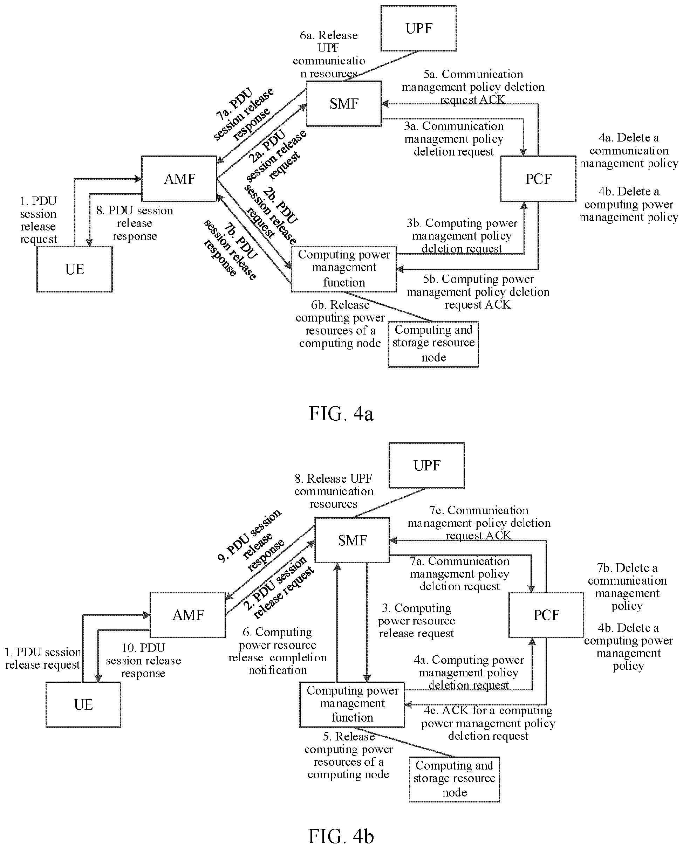

Embodiment 1. Referring to FIG. 4a, the following specific steps are included.

1. UE sends a PDU session release request to an AMF, where the PDU session release request carries a PDU session identifier for identifying a PDU session that the UE requests to release.

2a. The AMF sends the PDU session release request to an SMF, where the PDU session release request carries the PDU session identifier for identifying the PDU session requested to be released; and then 3a is performed.

2b. The AMF sends the PDU session release request to a computing power management function, where the PDU session release request carries the PDU session identifier for identifying the PDU session requested to be released; and then 3b is performed.

3a. The SMF sends a communication management policy deletion request to a PCF, where the communication management policy deletion request carries the PDU session identifier; and then 4a is performed.

3b. The computing power management function sends a computing power management policy deletion request to the PCF, where the computing power management policy deletion request carries the PDU session identifier; and then 4b is performed.

4a. The PCF deletes a communication management policy and then performs 5a.

4b. The PCF deletes a computing power management policy and then performs 5b.

5a. The PCF sends a communication management policy deletion request ACK to the SMF, where the communication management policy deletion request ACK carries the PDU session identifier; and then 6a is performed.

5b. The PCF sends a computing power management policy deletion request ACK to the computing power management function, where the computing power management policy deletion request ACK carries the PDU session identifier; and then 6b is performed.

6a. The SMF deletes UPF communication resources and then performs 7a;

6b. The computing power management function deletes computing power resources of a computing node and then performs 7b.

7a. The SMF sends a PDU session release response to the AMF, where the PDU session release response carries the PDU session identifier; and then 8 is performed.

7b. The computing power management function sends the PDU session release response to the AMF, where the PDU session release response carries the PDU session identifier; and then 8 is performed.

9. The AMF sends the PDU session release response to the UE, where the PDU session release response carries the PDU session identifier. The AMF notifies a base station to release the communication resources.

It should be noted that the foregoing 3a, 4a, 5a, 6a, and 7a are processed in parallel with 3b, 4b, 5a, 6b, and 7b. Another implementation of the PDU session release request/response in the above embodiment is a computing power session release request/response, and corresponding process steps are not repeated herein.

Embodiment 2. Referring to FIG. 4b, the following specific steps are included.

1. UE sends a PDU session release request to an AMF, where the PDU session release request carries a PDU session identifier for identifying a PDU session that the UE requests to release.

2. The AMF sends the PDU session release request to an SMF, where the PDU session release request carries the PDU session identifier; and then 3 and 7a are performed.

3. The SMF sends a computing power resource release response to a computing power management element, where the computing power resource release response carries the PDU session identifier; and then 4a is performed.

4a. A computing power management function sends a computing power management policy deletion request to a PCF, where the computing power management policy deletion request carries the PDU session identifier; and then 4b is performed.

4b. The PCF deletes a computing power management policy and then performs 4c.

4c. The PCF sends a computing power management policy deletion request ACK to the computing power management function, where the computing power management policy deletion request ACK carries the PDU session identifier; and then 5 is performed.

5. The computing power management function releases computing power resources of a computing node and then performs 6.

6. The computing power management function sends a computing resource release completion notification to the SMF, where the computing resource release completion notification carries the PDU session identifier; and then 9 is performed.

7a. The SMF sends a communication management policy deletion request to the PCF, where the communication management policy deletion request carries the PDU session identifier; and then 7b is performed.

7b. The PCF deletes a communication management policy and then performs 7c.

7c. The PCF sends a communication management policy deletion request ACK to the SMF, where the communication management policy deletion request ACK carries the PDU session identifier; and then 8 is performed.

8. The SMF releases UPF communication resources and performs 9.

9. The SMF sends a PDU session release response to the AMF, where the PDU session release response carries the PDU session identifier.

10. The AMF sends the PDU session release response to the UE, where the PDU session release response carries the PDU session identifier; and the AMF instructs a base station to release the communication resources.

It should be noted that the foregoing 3 to 6 are performed in parallel with 7a to 8. Scenarios for centralized processing performed by the SMF and scenarios for centralized processing performed by the computing power management element in the foregoing process can be deduced based on the above process. Details are not repeated herein. Another implementation of the PDU session release request/response in the above embodiments is a computing power session release request/response, and corresponding process steps are not repeated herein.

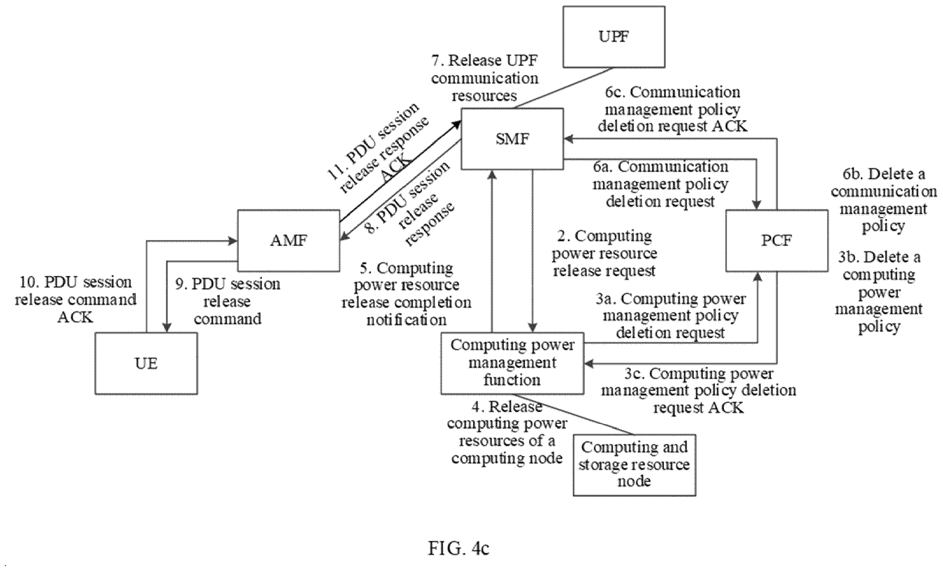

Referring to FIG. 4c, steps 2 to 7 in Embodiment 3 are the same as steps 3 to 8 in Embodiment 2. For the first step not shown in FIG. 4c, that is, a starting release request may be triggered in any manner of the following:
a. triggered by the AF via the PCF: for ending a computing task;
b. triggered by the AF via a NEF and then via the PCF;
c. triggered by the PCF for determining to release a computing session in a case that requirements of a computing service requested by the terminal cannot be satisfied;
d. triggered by a UDM in a case of invalid subscription;
e. triggered by the SMF in a case of congestion control or upon receiving another trigger message;
f. triggered by the computing power control function in a case of insufficient computing and storage resources or upon receiving other triggering messages.
g. triggered by the AMF for congestion control;
h. triggered by an AN via the AMF in a case of congestion control or in a form of sending a notification (notification) in a case that communication QoS cannot be met;

Embodiment 3 further includes the following steps.

Step 9: The AMF sends a PDU session release command to the UE.

Step 10. The UE sends a PDU session release command ACK to the AMF.

Step 11. The AMF sends the PDU session release response ACK to the SMF.

Embodiments of this application provide a computing session release apparatus, where the apparatus includes:
a first obtaining module, configured for an SMF to obtain a first message, where the first message is used for requesting release of communication resources and/or computing power resources of a computing session; and
a first sending module, configured for the SMF to send a second message to a policy control function PCF based on the first message, where the second message is used for requesting deletion of a communication management policy; and/or configured for the SMF to send a third message to a computing power management function based on the first message, where the third message is used for requesting release of the computing power resources.

Optionally, the first message is triggered in any one of the following manners:
triggered by a terminal via an AMF;
triggered by an AF via the PCF;
triggered by the PCF;
triggered by a UDM device;
triggered by the SMF;
triggered by the computing power management function;
triggered by the AMF; and
triggered by an AN via the AMF.

Optionally, the apparatus further includes:
a fifth receiving module used for the SMF to receive a fourth message from the PCF, where the fourth message is used to respond to the second message; and
a first processing module used for the SMF to release UPF communication resources based on the fourth message.

Optionally, the fifth receiving module is further configured for:
the SMF to receive a fifth message from the computing power management function, where the fifth message is used to indicate completion of release of computing power resources.

Optionally, the first sending module is further configured for:
the SMF to send a sixth message, where the sixth message is used to respond to the first message.

Optionally, the first message, the second message, the third message, the fourth message, the fifth message, and/or the sixth message include one or more of the following:
UE identifier;
computing session identifier;
PDU session identifier;
bearer identifier; and
QoS flow identifier.

Optionally, the computing power resources include computing resources and storage resources.

Embodiments of this application further provide a computing session release apparatus, including:
a first receiving module, configured for a computing power management function to receive a third message from an SMF; and
a second sending module, configured for the computing power management function to send a seventh message to a PCF based on the third message, where the seventh message is used for requesting deletion of a computing power management policy; where
the third message is sent by the SMF based on a first message, where the first message is used for requesting release of communication resources and/or computing power resources of a computing session.

Optionally, the first message is triggered in any one of the following manners:
triggered by a terminal via an AMF;
triggered by an AF via the PCF;
triggered by the PCF;
triggered by a UDM device;
triggered by the SMF;
triggered by the computing power management function;
triggered by the AMF; and
triggered by an AN via the AMF.

Optionally, the first receiving module may be further configured for:
the computing power management function to receive an eighth message from the PCF, where the eighth message is used to respond to the seventh message.

The apparatus further includes a second processing module configured for the computing power management function to release computing power resources of a computing node based on the eighth message.

The second sending module is further configured for the computing power management function to send a fifth message to the SMF, where the fifth message is used to indicate completion of release of computing power resources.

Optionally, the first message, the third message, the fifth message, the seventh message, and/or the eighth message include one or more of the following:
UE identifier;
computing session identifier;
PDU session identifier;
bearer identifier; and
QoS flow identifier.

Optionally, the computing power resources include computing resources and storage resources.

Embodiments of this application provide a computing session release apparatus including:
a second obtaining module, configured for a computing power management function to obtain a first message, where the first message is used for requesting release of communication resources and/or computing power resources of a computing session; and
a third sending module, configured for the computing power management function to send a seventh message to a PCF based on the first message, where the seventh message is used for requesting deletion of a computing power management policy; and/or configured for the computing power management function to send a ninth message to the SMF based on the first message, where the ninth message is used for requesting release of communication resources.

Optionally, the first message is triggered in any one of the following manners:
triggered by a terminal via an AMF;
triggered by an AF via the PCF;
triggered by the PCF;
triggered by a UDM device;
triggered by the SMF;
triggered by the computing power management function;
triggered by the AMF; and
triggered by an AN via the AMF.

Optionally, the apparatus further includes:
a sixth receiving module, configured for the computing power management function to receive an eighth message from the PCF, where the eighth message is used to respond to the seventh message;
a second processing module, configured for the computing power management function to release computing power resources of a computing node based on the eighth message.

Optionally, the sixth receiving module is further configured for:
the computing power management function to receive a tenth message from the SMF, where the tenth message is used to indicate completion of release of communication resources.

Optionally, the third sending module is further configured for:
the computing power management function to send an eleventh message, where the eleventh message is used to respond to the first message.

Optionally, the first message, the seventh message, the eighth message, the ninth message, the tenth message, and/or the eleventh message include one or more of the following:
UE identifier;
computing session identifier;
PDU session identifier;
bearer identifier; and
QoS flow identifier.

Optionally, the computing power resources include computing resources and storage resources.

Embodiments of this application provide a computing session release apparatus including:
a second receiving module, configured for an SMF to receive a ninth message from a computing power management function; and
a fourth sending module, configured for the SMF to send a second message to a PCF based on the ninth message, where the second message is used for requesting deletion of a communication management policy; where
the ninth message is sent by the computing power management function based on a first message, where the first message is used for requesting release of communication resources and/or computing power resources of a computing session.

Optionally, the first message is triggered in any one of the following manners:
triggered by a terminal via an AMF;
triggered by an AF via the PCF;
triggered by the PCF;
triggered by a UDM device;
triggered by the SMF;
triggered by the computing power management function;
triggered by the AMF; and
triggered by an AN via the AMF.

Optionally, the apparatus further includes:
a seventh receiving module, configured for the SMF to receive a fourth message from the PCF, where the fourth message is used to respond to the second message;
a first processing module, configured for the SMF to release UPF communication resources based on the fourth message; and
a fourth sending module, further configured for the SMF to send a tenth message to the computing power management function, where the tenth message is used to indicate completion of release of communication resources.

Optionally, the first message, the second message, the fourth message, the ninth message, and/or the tenth message include one or more of the following:
UE identifier;
computing session identifier;
PDU session identifier;
bearer identifier; and
QoS flow identifier.

Optionally, the computing power resources include computing resources and storage resources.

Embodiments of this application provide a computing session release apparatus including:
a third receiving module, configured for a PCF to receive second information from an SMF;
a first deletion module, configured for the PCF to delete a communication management policy based on the second information;
a third receiving module, further configured for the PCF to receive a seventh message from a computing power management function; and
a first deletion module, further configured for the PCF to delete the computing power management policy based on the seventh message; where
the second message is sent by the SMF based on a first message or a ninth message, the seventh message is sent by a computing power management function based on the first message or a third message, the third message is sent by the SMF based on the first message, the ninth message is sent by the computing power management function based on the first message, and the first message is used for requesting release of communication resources and/or computing power resources of a computing session.

Optionally, the first message is triggered in any one of the following manners:
triggered by a terminal via an AMF;
triggered by an AF via the PCF;
triggered by the PCF;
triggered by a UDM device;
triggered by the SMF;
triggered by the computing power management function;
triggered by the AMF; and
triggered by an AN via the AMF.

Optionally, the apparatus further includes:
a sixth sending module, configured for the PCF to send a fourth message to the SMF, where the fourth message is used to respond to the second message; and/or for the PCF to send an eighth message to the computing power management function, where the eighth message is used to respond to the seventh message.

Optionally, the first message, the second message, the third message, the fourth message, and/or the eighth message include one or more of the following:
UE identifier;
computing session identifier;
PDU session identifier;
bearer identifier; and
QoS flow identifier.

Optionally, the computing power resources include computing resources and storage resources.

Embodiments of this application provide a computing session release apparatus including:
a fourth receiving module, configured for an AMF to receive a first message from UE, where the first message is used for requesting release of one or both of the communication resources and the computing power resources of a computing session; and
a fifth sending module, configured for the AMF to send the first message to an SMF and/or a computing power management function.

Optionally, the fourth receiving module is further configured for the AMF to receive a sixth message from the SMF and send a twelfth message to the UE, where the twelfth message is used to respond to the first message; and/or configured for the AMF to receive an eleventh message from the computing power management function and send a thirteenth message to the UE, where the thirteenth message is used to respond to the first message.

Optionally, the fifth sending module is further configured for the AMF to send a fourteenth message to a network device based on the sixth message, where the fourteenth message is used to instruct the network device to release communication resources.

Optionally, the first message, the sixth message, the eleventh message, and/or the twelfth message include one or more of the following:
UE identifier;
computing session identifier;
PDU session identifier;
bearer identifier; and
QoS flow identifier.

Optionally, the computing power resources include computing resources and storage resources.

The computing session release apparatus in this embodiment of this application may be an apparatus or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network-attached storage (Network Attached Storage, NAS), a personal computer (personal computer, PC), a television (television, TV), a teller machine, a self-service machine, or the like. This is not specifically limited in the embodiments of this application.

The computing session release apparatus in this embodiment of this application may be an apparatus having an operating system. The operating system may be an Android (Android) operating system, an iOS operating system, or another possible operating system. This is not specifically limited in the embodiments of this application.

The computing session release apparatus provided in this embodiment of this application can implement the processes implemented in the method embodiment in FIG. 2 to FIG. 4c. To avoid repetition, details are not described herein again.

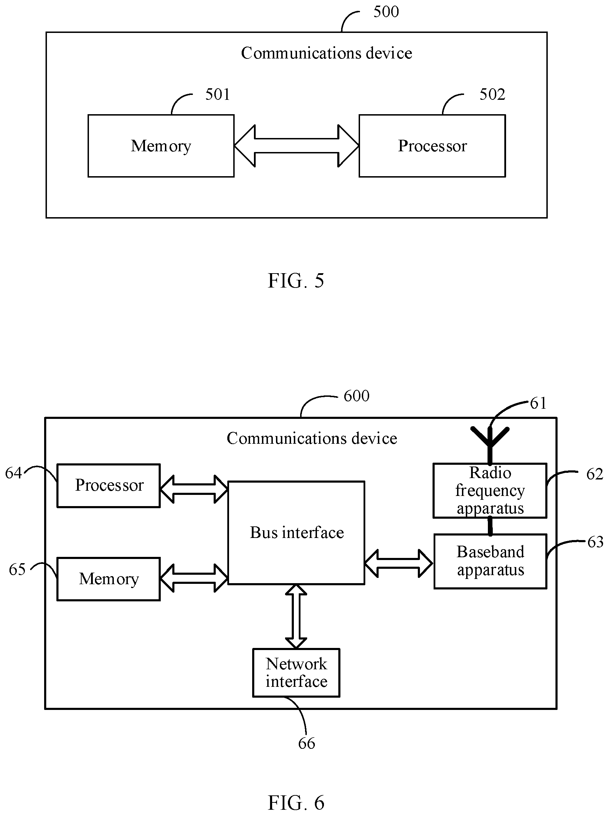

Optionally, as shown in FIG. 5, an embodiment of this application further provides a communications device 500 including a memory 501, a processor 502, and a program or instructions stored in the memory 501 and capable of running on the processor 502. When the program or the instructions are executed by the processor 502, the processes of the foregoing embodiments are implemented, with the same technical effects achieved. To avoid repetition, details are not described herein again.

It should be noted that the communications device in this embodiment of this application includes mobile communications devices and non-mobile communications devices.

Referring to FIG. 6, an embodiment of this application further provides a communications device including a processor and a communication interface. This communications device embodiment corresponds to the foregoing network-side device method embodiment. All processes and implementations in the foregoing method embodiment can be applicable to this communications device embodiment, with the same technical effect achieved.

It can be understood that the communications device may be an entity in the network and is configured to perform the SMF-side method; the communications device can alternatively be the computing power management function entity in the network and is configured to perform the computing power management function-side method in the method embodiments described above; the communications device can alternatively be the PCF entity in the network and is configured to perform the PCF-side method in the method embodiments mentioned above; the communications device can alternatively be the AMF entity in the network and is configured to perform the AMF-side method in the method embodiments mentioned above.

As shown in FIG. 6, the communications device 600 includes an antenna 61, a radio frequency apparatus 62, and a baseband apparatus 63. The antenna 61 is connected to the radio frequency apparatus 62. In an uplink direction, the radio frequency apparatus 62 receives information by using the antenna 61 and sends the received information to the baseband apparatus 63 for processing. In a downlink direction, the baseband apparatus 63 processes to-be-sent information, and sends the information to the radio frequency apparatus 62; and the radio frequency apparatus 62 processes the received information and then sends the information out by using the antenna 61.

The frequency band processing apparatus may be located in the baseband apparatus 63. The method performed by the communications device in the foregoing embodiments may be implemented in the baseband apparatus 63, and the baseband apparatus 63 includes a processor 64 and a memory 65.

The baseband apparatus 63 may include, for example, at least one baseband processing unit, where a plurality of chips are disposed on the baseband processing unit. As shown in FIG. y, one of the chips is, for example, the processor 64, connected to the memory 65, to invoke a program in the memory 65 to perform the operation of the communications device shown in the foregoing method embodiment.

The baseband apparatus y3 may further include a network interface 66 configured to exchange information with the radio frequency apparatus 62, where the interface is, for example, a common public radio interface (common public radio interface, CPRI for short).

Specifically, the communications device in this embodiment of the present invention further includes instructions or a program stored in the memory 65 and capable of running on the processor 64. The processor 64 invokes the instructions or program in the memory 65 to perform the method performed by the modules shown in FIG. 6, with the same technical effects achieved. To avoid repetition, details are not described herein again.

An embodiment of this application also provides a readable storage medium, where the readable storage medium has a program or instructions stored thereon, and when the program or instructions are executed by the processor, the processes in the foregoing method embodiment are implemented with the same technical effects achieved. To avoid repetition, details are not further described now.

The processor is the processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application also provides a chip including a processor and a communication interface. The communication interface is coupled with the processor, and the processor is configured to execute the program or instructions to implement the processes in the foregoing method embodiment with the same technical effects achieved. To avoid repetition, details are not further described now.

It should be understood that the chip mentioned in an embodiment of this application may also be referred to as a system-level chip, a system chip, a chip system, a system-on-chip, or the like.

An embodiment of this application provides a computer program product, where the computer program product is stored in a non-transient storage medium, and the computer program product is configured to be executed by at least one processor so as to implement the steps of the method described above.

An embodiment of this application also provides an execution apparatus, where the execution apparatus is configured to execute the method described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the method and apparatus in the embodiments of this application is not limited to performing the functions in the order shown or discussed, but may also include performing the functions in a substantially simultaneous manner or a reverse order depending on the functions involved. For example, the described method may be performed in an order different from the order described, and steps may be added, omitted, or combined. In addition, features described with reference to some examples may be combined in other examples.

According to the description of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred embodiment. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A computing session release method, comprising:
obtaining, by a session management function SMF, a first message, wherein the first message is used for requesting release of communication resources and/or computing power resources of a computing session;
sending, by the SMF, a second message to a policy control function PCF based on the first message, wherein the second message is used for requesting deletion of a communication management policy; and/or,
sending, by the SMF, a third message to a computing power management function based on the first message, wherein the third message is used for requesting release of the computing power resources.

2. The method according to claim 1, wherein the first message is triggered in any one of the following manners:
triggered by a terminal via a mobility management function AMF;
triggered by an application function AF via the PCF;
triggered by the PCF;
triggered by a unified data management UDM device;
triggered by the SMF;
triggered by the computing power management function;
triggered by the AMF; and
triggered by an access network AN via the AMF.

3. The method according to claim 1, wherein the method further comprises:
receiving, by the SMF, a fourth message from the PCF, wherein the fourth message is used to respond to the second message; and
releasing, by the SMF, user plane function UPF communication resources based on the fourth message.

4. The method according to claim 1, wherein the method further comprises:
receiving, by the SMF, a fifth message from the computing power management function, wherein the fifth message is used to indicate completion of release of computing power resources.

5. The method according to claim 1, wherein the method further comprises:
sending, by the SMF, a sixth message, wherein the sixth message is used to respond to the first message.

6. The method according to any one of claims 1 to 5, wherein the first message, the second message, the third message, the fourth message, the fifth message, and/or the sixth message comprises one or more of the following:
UE identifier;
computing session identifier;
protocol data unit PDU session identifier;
bearer identifier; and
quality of service QoS flow identifier.

7. The method according to claim 1, wherein the computing power resources comprise computing resources and storage resources.

8. A computing session release method, comprising:
receiving, by a computing power management function, a third message from an SMF; and
sending, by the computing power management function, a seventh message to a PCF based on the third message, wherein the seventh message is used for requesting deletion of a computing power management policy; wherein
the third message is sent by the SMF based on a first message, wherein the first message is used for requesting release of communication resources and/or computing power resources of a computing session.

9. The method according to claim 8, wherein the first message is triggered in any one of the following manners:
triggered by a terminal via an AMF;
triggered by an AF via the PCF;
triggered by the PCF;
triggered by a UDM device;
triggered by the SMF;
triggered by the computing power management function;
triggered by the AMF; and
triggered by an AN via the AMF.

10. The method according to claim 8, wherein the method further comprises:
receiving, by the computing power management function, an eighth message from the PCF, wherein the eighth message is used to respond to the seventh message;
releasing, by the computing power management function, computing power resources of a computing node based on the eighth message; and
sending, by the computing power management function, a fifth message to the SMF, wherein the fifth message is used to indicate completion of release of computing power resources.

11. The method according to any one of claims 8 to 10, wherein the first message, the third message, the fifth message, the seventh message, and/or the eighth message comprises one or more of the following:
UE identifier;
computing session identifier;
PDU session identifier;
bearer identifier; and
QoS flow identifier.

12. The method according to claim 8, wherein the computing power resources comprise computing resources and storage resources.

13. A computing session release method, comprising:
obtaining, by a computing power management function, a first message, wherein the first message is used for requesting release of communication resources and/or computing power resources of a computing session;
sending, by the computing power management function, a seventh message to a PCF based on the first message, wherein the seventh message is used for requesting deletion of a computing power management policy; and/or,
sending, by the computing power management function, a ninth message to an SMF based on the first message, wherein the ninth message is used for release of communication resources.

14. The method according to claim 13, wherein the first message is triggered in any one of the following manners:
triggered by a terminal via an AMF;
triggered by an AF via the PCF;
triggered by the PCF;
triggered by a UDM device;
triggered by the SMF;
triggered by the computing power management function;
triggered by the AMF; and
triggered by an AN via the AMF.

15. The method according to claim 13, wherein the method further comprises:
receiving, by the computing power management function, an eighth message from the PCF, wherein the eighth message is used to respond to the seventh message;
releasing, by the computing power management function, computing power resources of a computing node based on the eighth message.

16. The method according to claim 13, wherein the method further comprises:
receiving, by the computing power management function, a tenth message from the SMF, wherein the tenth message is used to indicate completion of release of communication resources.

17. The method according to claim 13, wherein the method further comprises:
sending, by the computing power management function, an eleventh message, wherein the eleventh message is used to respond to the first message.

18. The method according to any one of claims 13 to 17, wherein the first message, the seventh message, the eighth message, the ninth message, the tenth message, and/or the eleventh message comprises one or more of the following:
UE identifier;
computing session identifier;
PDU session identifier;
bearer identifier; and
QoS flow identifier.

19. The method according to claim 13, wherein the computing power resources comprise computing resources and storage resources.

20. A computing session release method, comprising:
receiving, by an SMF, a ninth message from a computing power management function; and
sending, by the SMF, a second message to a PCF based on the ninth message, wherein the second message is used for requesting deletion of a communication management policy; wherein
the ninth message is sent by the computing power management function based on a first message, wherein the first message is used for requesting release of communication resources and/or computing power resources of a computing session.

21. The method according to claim 20, wherein the first message is triggered in any one of the following manners:
triggered by a terminal via an AMF;
triggered by an AF via the PCF;
triggered by the PCF;
triggered by a UDM device;
triggered by the SMF;
triggered by the computing power management function;
triggered by the AMF; and
triggered by an AN via the AMF.

22. The method according to claim 20, wherein the method further comprises:
receiving, by the SMF, a fourth message from the PCF, wherein the fourth message is used to respond to the second message;
releasing, by the SMF, UPF communication resources based on the fourth message; and
sending, by the SMF, a tenth message to the computing power management function, wherein the tenth message is used to indicate completion of release of communication resources.

23. The method according to any one of claims 20 to 22, wherein the first message, the second message, the fourth message, the ninth message, and/or the tenth message comprise one or more of the following:
UE identifier;
computing session identifier;
PDU session identifier;
bearer identifier; and
QoS flow identifier.

24. The method according to claim 20, wherein the computing power resources comprise computing resources and storage resources.

25. A computing session release method, comprising:
receiving, by a PCF, second information from an SMF; and
deleting, by the PCF, a communication management policy based on the second information;
and/or
receiving, by the PCF, a seventh message from a computing power management function; and
deleting, by the PCF, a computing power management policy based on the seventh message; wherein
the second message is sent by the SMF based on a first message or a ninth message, the seventh message is sent by the computing power management function based on the first message or a third message, the third message is sent by the SMF based on the first message, the ninth message is sent by the computing power management function based on the first message, and the first message is used for requesting release of communication resources and/or computing power resources of a computing session.

26. The method according to claim 25, wherein the first message is triggered in any one of the following manners:
triggered by a terminal via an AMF;
triggered by an AF via the PCF;
triggered by the PCF;
triggered by a UDM device;
triggered by the SMF;
triggered by the computing power management function;
triggered by the AMF; and
triggered by an AN via the AMF.

27. The method according to claim 25, wherein the method further comprises:
sending, by the PCF, a fourth message to the SMF, wherein the fourth message is used to respond to the second message;
and/or
sending, by the PCF, an eighth message to the computing power management function, wherein the eighth message is used to respond to the seventh message.

28. The method according to any one of claims 25 to 27, wherein the first message, the second message, the third message, the fourth message, and/or the eighth message comprise one or more of the following:
UE identifier;
computing session identifier;
PDU session identifier;
bearer identifier; and
QoS flow identifier.

29. The method according to claim 25, wherein the computing power resources comprise computing resources and storage resources.

30. A computing session release method, comprising:
receiving, by an AMF, a first message from UE, wherein the first message is used for requesting release of communication resources and/or computing power resources of a computing session; and
sending, by the AMF, the first message to an SMF and/or a computing power management function.

31. The method according to claim 30, wherein the method further comprises:
receiving, by the AMF, a sixth message from the SMF and sending a twelfth message to the UE, wherein the twelfth message is used to respond to the first message; and/or,
receiving, by the AMF, an eleventh message from the computing power management function and sending a thirteenth message to the UE, wherein the thirteenth message is used to respond to the first message.

32. The method according to claim 30, wherein the method further comprises:
sending, by the AMF, a fourteenth message to a network device based on the sixth message, wherein the fourteenth message is used to instruct the network device to release communication resources.

33. The method according to any one of claims 30 to 32, wherein the first message, the sixth message, the eleventh message, and/or the twelfth message comprises one or more of the following:
UE identifier;
computing session identifier;
PDU session identifier;
bearer identifier; and
QoS flow identifier.

34. The method according to claim 30, wherein the computing power resources comprise computing resources and storage resources.

35. A computing session release apparatus, comprising:
a first obtaining module, configured for an SMF to obtain a first message, wherein the first message is used for requesting release of communication resources and/or computing power resources of a computing session; and
a first sending module, configured for the SMF to send a second message to a policy control function PCF based on the first message, wherein the second message is used for requesting deletion of a communication management policy; and/or configured for the SMF to send a third message to a computing power management function based on the first message, wherein the third message is used for requesting release of the computing power resources.

36. A computing session release apparatus, comprising:
a first receiving module, configured for a computing power management function to receive a third message from an SMF; and
a second sending module, configured for the computing power management function to send a seventh message to a PCF based on the third message, wherein the seventh message is used for requesting deletion of a computing power management policy; wherein
the third message is sent by the SMF based on a first message, wherein the first message is used for requesting release of communication resources and/or computing power resources of a computing session.

37. A computing session release apparatus, comprising:
a second obtaining module, configured for a computing power management function to obtain a first message, wherein the first message is used for requesting release of communication resources and/or computing power resources of a computing session; and
a third sending module, configured for the computing power management function to send a seventh message to a PCF based on the first message, wherein the seventh message is used for requesting deletion of a computing power management policy; and/or configured for the computing power management function to send a ninth message to the SMF based on the first message, wherein the ninth message is used for requesting release of communication resources.

38. A computing session release apparatus, comprising:
a second receiving module, configured for an SMF to receive a ninth message from a computing power management function; and
a fourth sending module, configured for the SMF to send a second message to a PCF based on the ninth message, wherein the second message is used for requesting deletion of a communication management policy; wherein
the ninth message is sent by the computing power management function based on a first message, wherein the first message is used for requesting release of communication resources and/or computing power resources of a computing session.

39. A computing session release apparatus, comprising:
a third receiving module, configured for a PCF to receive second information from an SMF;
a first deletion module, configured for the PCF to delete a communication management policy based on the second information;
a third receiving module, further configured for the PCF to receive a seventh message from a computing power management function; and
a first deletion module, further configured for the PCF to delete the computing power management policy based on the seventh message; wherein
the second message is sent by the SMF based on a first message or a ninth message, the seventh message is sent by the computing power management function based on the first message or a third message, the third message is sent by the SMF based on the first message, the ninth message is sent by the computing power management function based on the first message, and the first message is used for requesting release of communication resources and/or computing power resources of a computing session.

40. A computing session release apparatus, comprising:
a fourth receiving module, configured for an AMF to receive a first message from UE, wherein the first message is used for requesting release of one or both of the communication resources and the computing power resources of a computing session; and
a fifth sending module, configured for the AMF to send the first message to an SMF and/or a computing power management function.

41. A communications device, comprising a processor, a memory, and a program stored on the memory and capable of running on the processor, wherein when the program is executed by the processor, the steps of the method according to any one of claims 1 to 7, the steps of the method according to any one of claims 8 to 12, the steps of the method according to any one of claims 13 to 19, the steps of the method according to any one of claims 20 to 24, the step of the method according to any one of claims 25 to 29, or the steps of the method according to any one of claims 30 to 34 are implemented.

42. A readable storage medium, wherein the readable storage medium has a program or instructions stored thereon, and when the program or instructions are executed by a processor, the steps of the method according to any one of claims 1 to 7, the steps of the method according to any one of claims 8 to 12, the steps of the method according to any one of claims 13 to 19, the steps of the method according to any one of claims 20 to 24, the steps of the method according to any one of claims 25 to 29, or the steps of the method according to any one of claims 30 to 34 are implemented.

43. A chip, comprising a processor and a communication interface, wherein the communication interface is coupled to the processor, the processor is configured to run a program or instructions to implement the steps of the method according to any one of claims 1 to 7, the steps of the method according to any one of claims 8 to 12, the steps of the method according to any one of claims 13 to 19, the steps of the method according to any one claims 20 to 24, the steps of the method according to any one of claims 25 to 29, or the steps of the method according to any one of claims 30 to 34.

44. A computer program product, wherein the program product is stored in a non-volatile storage medium, the program product is executed by at least one processor to implement the steps of the method according to any one of claims 1 to 7, the steps of the method according to any one of claims 8 to 12, the steps of the method according to any one of claims 13 to 19, the steps of the method according to any one of claims 20 to 24, the steps of the method according to any one of claims 25 to 29, or the steps of the method according to any one of claims 30 to 34.
